# EUROPEAN PATENT SPECIFICATION

(11) **EP 3 304 786 B1**
(45) Date of publication and mention of the grant of the patent: **17.07.2019**
(21) Application number: 16723189.3
(22) Date of filing: 25.04.2016
(51) Int. Cl.: H04L 1/18

(54) **APPARATUS AND METHOD FOR HANDLING THE CONFIGURATION OF BUNDLE SIZES**
VORRICHTUNG UND VERFAHREN ZUR HANDHABUNG DER KONFIGURATION VON BÜNDELGRÖSSEN
APPAREIL ET PROCÉDÉ PERMETTANT DE GÉRER LA CONFIGURATION DE TAILLES DE FAISCEAU

(30) Priority: 25.05.2015 US 201562166034 P
(43) Date of publication of application: 11.04.2018
(73) Proprietor: Telefonaktiebolaget LM Ericsson (publ), 164 83 Stockholm (SE)
(72) Inventor: HÖGLUND, Andreas, 170 62 Solna (SE); TIRRONEN, Tuomas, 00950 Helsinki (FI)
(74) Representative: Zacco Sweden AB
(86) International application number: PCT/SE2016/050363
(87) International publication number: WO 2016/190796

(56) References cited:
- EP-A1- 2 635 082
- EP-A1- 2 648 356
- WO-A1-2013/169164
- US-A1- 2015 039 958

## Description

### Technical Field

Embodiments of the present invention relate to an apparatus and method for handling the configuration of bundle sizes in communications involving the transmission and/or reception of more than one bundle in a transmission and/or reception attempt.

### Background

The realization of a networked society with over 50 billion connected devices relies on the paradigm shift of the introduction of machine type communication (MTC). That is, the number of connections will increase tenfold when human interaction is not necessary for initiating radio access. It is envisioned that all devices that will potentially benefit from the networked society will be connected in the future, for example sensors, actuators, home electronics, industry control, the smart home, cars, and so on.

Use cases which already exist and are to be addressed in the near future are applications such as the monitoring of gas, electricity and water meters. In these cases, as well as more futuristic ones, good coverage is required since the sensors are often located deep indoors or underground in basements. MTC devices are further often of low complexity and have reduced capabilities compared to normal devices (for example having just one receiving antenna, or a device bandwidth that is smaller than the system bandwidth, etc.). Furthermore, the power consumption of MTC devices should be low in order to prolong battery life such that interactive battery charging is not required.

A Transmission Time Interval (TTI) is the smallest unit of time in which a base station, such as an eNB in a Long Term Evolution network, is capable of scheduling any user for uplink or downlink transmission.

Hybrid Automatic Repeat Request (HARQ) is an error correction mechanism used in communication systems to protect data against noisy wireless communication channels. For example, in a technique involving HARQ with soft combining, incorrectly received coded data blocks can be stored at a receiver rather than discarded, and when a re-transmitted block is received, the two blocks can be combined.

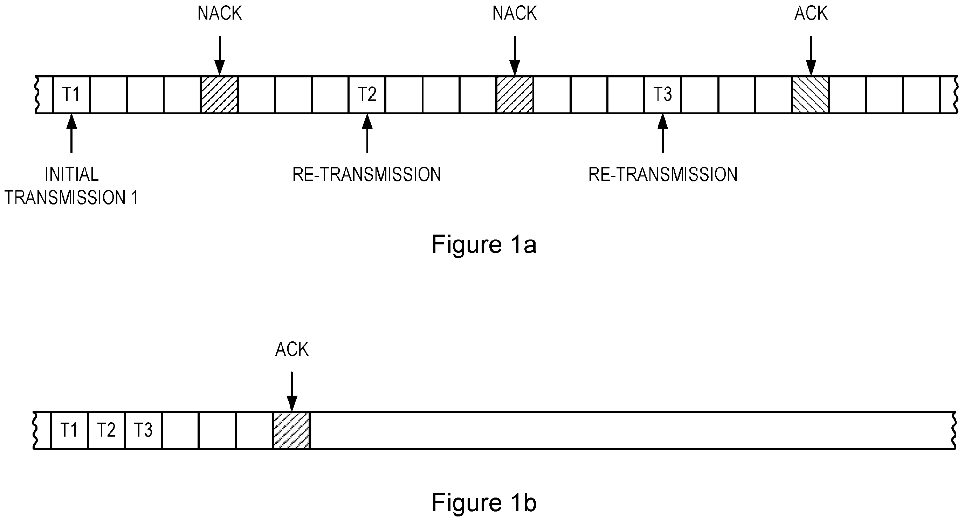

A drawback of HARQ is that it can result in delay and large control overhead in the case of poor radio conditions. For example, Figure 1a shows an example of HARQ being used in LTE in a normal manner. Data is transmitted in a first transmission time interval T1. At some point later, in response to receiving a negative acknowledgement (NACK) signal from a remote receiver, the data is retransmitted in transmission time interval T2. At some point later, in response to receiving another NACK signal from the remote receiver, the data is re-transmitted again in a third transmission time interval T3. If the remote receiver has been able to correctly combine this data with the previously transmitted data, i.e. T1 and T2, then an acknowledgement signal (ACK) is ultimately received. As can be seen, a sender has to attempt many transmissions in such a HARQ technique, which can cause undesirable delays. It is noted that in some applications there may not necessarily be an explicit NACK message, but a retransmission grant message instead, which signals the UE to send a retransmission. TTI bundling is a feature used to improve coverage in poor radio conditions, for example at cell edges or for devices located indoors, but also to reduce the delays seen in Figure 1a. Referring to Figure 1b, instead of a sender re-transmitting the data after each NACK, the sender sends a plurality of versions of the same sets of bits in consecutive TTIs (i.e. sends a number of repetitions), and the remote receiver sends back an acknowledgement when it successfully decodes the bits.

In the 3^{rd} Generation Partnership Project (3GPP), work relating to MTC in Release 13 of the technical specifications is ongoing to support coverage enhancements of up to 15 dB. One feature for helping to achieve this is the use of time repetition in a TTI bundling manner, similar to that introduced for voice over internet protocol (VoIP) in Release 8 of the 3GPP technical specifications.

In Rel-8, TTI bundling is limited to the uplink shared data channel and fixed to four repetitions. For Rel-13, and for MTC user equipment devices requiring coverage enhancements, the amount of repetitions can be configured per cell and the number of repetitions can be configured per UE (and can vary further per physical channel). Link simulations show that the number of required repetitions can be over 100 to achieve the targeted 15 dB gain for some channels.

The need of time repetition for data channels as well as control channels means that many procedures may need to be updated. One such procedure is the HARQ, for which the changed timing means that the number of HARQ processes is reduced, and scheduling becomes more cumbersome due to the varying amount of repetitions between users and different physical channels. With the coverage enhancements, one TTI bundle is considered to be one transmission attempt and as in legacy operation, in the case of NACK the soft bits are stored and later recombined with a later retransmission of the TTI bundle.

In Rel-12 of the 3GPP technical specifications, a lower complexity UE category (Cat-0) was introduced to support lower manufacturing costs for MTC devices. In Rel-13, further complexity reductions are being considered, where one of the most significant changes is a reduced device bandwidth to 6 Physical Resource Blocks (PRBs), or 1.4 MHz. This means that some legacy channels, such as a downlink control channel, e.g. the Physical Downlink Control Channel (PDCCH), which spans over the entire system bandwidth, cannot be received. The working assumption is for these low complexity UEs to replace control channels such as PDCCH with an updated version, referred to as the Enhanced Physical Downlink Control Channel (E-PDCCH), or a Machine Type Communication Physical Downlink Control Channel (M-PDCCH), which is transmitted only within 6 PRBs. The lower complexity of the devices means that a small number of repetitions might be needed also for these devices in normal coverage. That is, to counteract the losses from using only one receiving antenna (as per Rel-12), loss of frequency diversity (as per Rel-13), and so on. Further, due to the required time repetition the working assumption is to have cross-subframe scheduling. That is, a transmission is first scheduled on E/M-PDCCH and then the first repetition of the actual data transmission is carried out after the final transmission of the E/M-PDCCH. As such, the control channel is transmitted first, and the data channel thereafter.

Time repetition is very costly, both in terms of system resources and the interference caused, as well as the power consumption for devices. It is therefore desirable that the number of repetitions in a bundle, such as a TTI bundle for a certain UE closely matches what is actually required for successful decoding, to avoid wasted resources from over-provisioning or from retransmissions. Although devices requiring very high numbers of repetitions are assumed to be close to stationary, the radio environment changes over time and the required number of repetitions will not be constant.

Further, control signaling, e.g., over E/M-PDCCH, must also be repeated and therefore the number of acknowledgements (ACK/NACKs) sent over this channel should be kept to a minimum to save resources. US2015/039958 A1 discloses different TTI-bundling size for initial transmission and retransmission. The initial bundling size is based on channel quality or latency requirements. Bundling size for retransmissions is determined based on a scheduling function.

### Summary

It is an aim of the present invention to provide a method and apparatus which help obviate or reduce at least one or more of the disadvantages mentioned above. According to one aspect of the present invention there is provided a method in a wireless network node for handling the configuration of bundle sizes according to appended claim 1.

According to another aspect of the present invention there is provided a method in a wireless device for handling the configuration of bundle sizes according to appended claim 12.

According to another aspect of the present invention, there is provided a wireless network node for handling the configuration of bundle sizes according to appended claim 15.

According to another aspect there is provided a wireless device for handling the configuration of bundle sizes according to appended claim 16.

According to another aspect of the present invention there is provided a wireless network node for handling the configuration of bundle sizes according to appended claim 18.

According to another aspect of the present invention, there is provided a wireless device for handling the configuration of bundle sizes according to appended claim 17.

### Brief description of the drawings

For a better understanding of examples of the present invention, and to show more clearly how the examples may be carried into effect, reference will now be made, by way of example only, to the following drawings in which:
Figure 1a shows an example of normal Transmission Time Intervals (TTIs) used in a Hybrid Automatic Repeat Request, HARQ, communication;
Figure 1b shows an example of bundled TTIs used in HARQ communication;
Figure 2a shows an example of one application of bundled TTIs;
Figure 2b shows an example of another application of bundled TTIs;
Figure 2c shows an example of another application of bundled TTIs;
Figure 3 shows an example of a method according to an embodiment;
Figure 4a shows an example of an application according to the method of Figure 3;
Figure 4b shows an example of an application according to the method of Figure 3;
Figure 5a shows an example of a method according to another embodiment;
Figure 5b shows an example of a method according to another embodiment;
Figure 6 shows an example of a wireless device according to an embodiment;
Figure 7 shows an example of a wireless network node according to an embodiment;
Figure 8 shows an example of another wireless device according to an embodiment;
Figure 9 shows an example of another wireless network node according to an embodiment;
Figure 10 shows a graphical representation of an example of the system resource cost of various bundle size alternatives for a control channel, such as E-PDCCH or M-PDCCH, having a feedback factor of 0.5;
Figure 11 shows a graphical representation of another example of the system resource cost of various bundle size alternatives for a control channel, such as E-PDCCH or M-PDCCH, having a feedback factor of 0.5; and
Figure 12 shows a graphical representation of another example of the system resource cost of various bundle size alternatives for a control channel, such as E-PDCCH or M-PDCCH, having a feedback factor of 0.1.

### Detailed description

The size of a bundle, for example the size of a Hybrid Automatic Repeat Request (HARQ) Transmission Time Interval (TTI) bundle can depend, for example, on a target block error rate (BLER-target). If the BLER-target is very low, such as 1%, a system can be configured such that the first transmission is received with a 99% success probability. In the case of coverage enhancements this means that the TTI bundle will need to include a sufficiently high number of repetitions that this first transmission is almost certainly correctly received, such that the first HARQ feedback is an acknowledgement signal (ACK) received over a control channel, for example over an Enhanced Physical Downlink Control Channel (E-PDCCH).

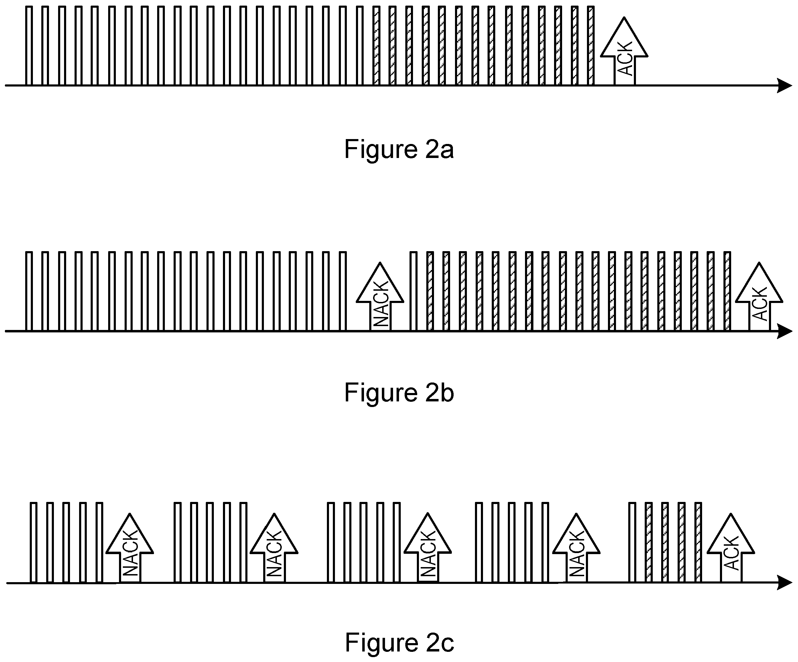

However, a disadvantage of such a system is that, if the number of repetitions is most often too large, i.e. most often larger than the number of repetitions required to correctly receive the first transmission, then many repetitions are sent unnecessarily. For example, referring to Figure 2a, this shows an example in which the number of repetitions within a single HARQ attempt is shown as 35 in number, and as a consequence if only 21 repetitions, for example, are required to successfully decode the signal being repeated (illustrated by the 21 clear columns in Figure 2a), then the remaining 14 repetitions (illustrated by the hatched columns) are sent unnecessarily.

Even more disadvantageously, if the TTI bundle size is set smaller, for example having 20 repetitions within each TTI bundle transmission within a particular HARQ attempt as shown in Figure 2b, then if only one or a few repetitions are missing to successfully decode data during an initial transmission, such that the initial feedback is a negative acknowledgement (NACK), then a new large bundle of repetitions have to be sent as a retransmission, where the majority of the repetitions in the retransmission are unnecessary and a pure waste. For example, assuming as above that 21 repetitions are needed to successfully decode the signal being repeated, and assuming a TTI bundle size of 20 repetitions, then a NACK feedback signal is received after the first 20 repetitions of the initial transmission. In the retransmission comprising 20 repetitions, only one of these repetitions is required to successfully decode the signal, with the remaining 19 repetitions (illustrated as hatched columns) being unnecessary and a pure waste.

These disadvantages are heightened by the fact that, in practice, for low category MTC devices the required number of repetitions for successful decoding can be much higher, for example over 100 repetitions.

A possible remedy to this is to have smaller bundle sizes, for example by setting a higher BLER-target (e.g. 10%). This is illustrated in Figure 2c, where each TTI bundle within a particular HARQ attempt comprises, for example, 5 repetitions. Assuming, as above, that an example requires 21 repetitions to successfully decode a signal, then as can be seen from Figure 2c, the number of repetitions that are sent in vain, and which would lead to resource wastage, can be drastically reduced in the arrangement of Figure 2c (to just 4 in this example, within the last retransmission, illustrated as hatched columns). However, the number of feedback NACKs sent over the control channel, such as an E-PDCCH, is much larger. Since each NACK requires numerous repetitions itself, perhaps even as many as in the TTI bundle, and because the number of NACKs would be 20 if 101 repetitions are required in a typical example (instead of the 4 NACKs for the 21 repetitions required in the example of Figure 2c), then the control signaling overhead and resource waste can be substantial.

The embodiments described herein aim to alleviate or reduce one or more of these disadvantages.

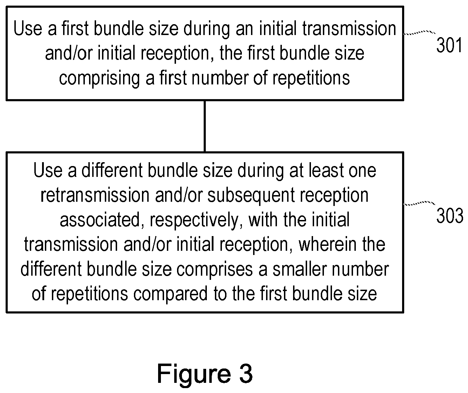

Figure 3 shows a method in a wireless device according to an embodiment, for handling the configuration of bundle sizes in communications involving the transmission and/or reception of more than one bundle in a transmission and/or reception attempt. It is noted that such communications in this embodiment (and the other embodiments described herein) may include communications related to transmission time intervals (TTIs), although it is noted that the embodiments described herein are not limited to communications relating to TTIs. The method comprises using a first bundle size during an initial transmission and/or an initial reception, the first bundle size comprising a first number of repetitions, step 301. The method further comprises using a different bundle size during at least one retransmission and/or subsequent reception associated, respectively, with the initial transmission and/or initial reception, step 303. The different bundle size comprises a smaller number of repetitions compared to the first bundle size.

It is noted that the at least one retransmission and the associated initial transmission may form part of the same HARQ attempt (i.e. such that the different bundle sizes, e.g. TTI bundle sizes, exist within a single HARQ attempt). Likewise, the at least one subsequent reception and the associated initial reception may form part of the same HARQ attempt.

By making a retransmission within a HARQ attempt have fewer repetitions, for example compared to an earlier transmission or initial retransmission, this can enable the number of unnecessary repetitions to be minimized, as well as the number of NACKs. This can also have an advantage of avoiding the need to overprovision the initial transmission.

In one embodiment, the different bundle sizes can be implicitly adopted, for example according to a pre-defined arrangement without the need for signalling every time a HARQ attempt is performed. In another embodiment, the configuration information relating to the different bundle sizes may be explicitly included in downlink assignment or uplink grant procedures, for example conveyed on an E-PDCCH or M-PDCCH.

In one example, a plurality of retransmissions and/or a plurality of subsequent receptions comprise bundle sizes having a fixed number of repetitions. In one embodiment all retransmissions have the same smaller bundle size. The size of this smaller bundle size can be selected, for example, as a balance between repetitions sent unnecessarily and the number of NACKs sent.

The fixed number of repetitions (within each retransmission) may comprise a predetermined percentage of the first number of repetitions (within the bundle of the first or initial transmission). The predetermined percentage may be based, for example, on one or more parameters relating to channel conditions, whereby such channel conditions might vary over time. As such, a different predetermined percentage may be used in one series of retransmissions of one HARQ attempt, compared to the predetermined percentage used in a series of retransmissions of another HARQ attempt. It is noted that the predetermined percentage may be based on other criteria, other than channel conditions, including for example the type of NACK signal used.

In one example the fixed number of repetitions may be based on an initial access, i.e., based on what random access preamble the wireless device uses (Rel-13 preambles will be grouped per repetition level required, such that this information may be used to determine the predetermined factor for the retransmission bundle sizes as well). According to one example, a UE can select the initial repetition factor by measuring the signal strength as configured, and then perform the random access. The network can control the used repetition factor after random access when the actual data transmission is done.

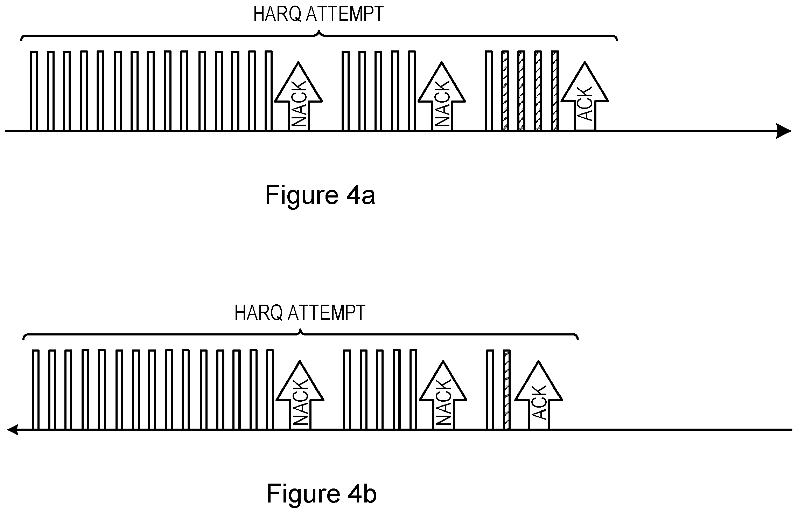

Figure 4a depicts an example whereby the bundle size of the initial transmission is configured to be close to what is known to be required for the wireless device or UE (which can be obtained, for example, from the random access and Radio Resource Control (RRC) connection setup procedures). A plurality of subsequent retransmissions in this example are then configured with considerably fewer repetitions. In this particular example, all of the subsequent retransmissions are configured with considerably fewer repetitions. In this manner, an initial transmission within a HARQ attempt gets close to what is required, with smaller fixed bundles then being sent in the retransmission(s) within the same HARQ attempt to accumulate the remaining energy required and soft combine with the initial soft bits. In this example the initial transmission comprises a bundle size (e.g. TTI bundle size) of 15 repetitions, with each subsequent retransmission having bundle sizes (e.g. TTI bundle sizes) of 5 repetitions. Therefore, in an example where 21 repetitions are required to successfully decode, although this embodiment also has four wasted repetitions in the final retransmission (being similar to Figure 2c in this respect), the embodiment has the advantage of requiring fewer NACK signals, (i.e. only two compared to the four in Figure 2c).

In another example, a plurality of successive retransmissions and/or subsequent receptions have bundle sizes which comprise a successively smaller number of repetitions.

Such an example is depicted in Figure 4b, whereby the bundle size of the initial transmission is configured to be close to what is known to be required for the wireless device or UE (which can be obtained, for example, from the random access and RRC connection setup procedures). The first retransmission is then configured with fewer repetitions. The second retransmission is configured with even fewer repetitions, and so on. In this manner, an initial transmission within a HARQ attempt gets close to what is required, with smaller bundles then being sent in the retransmission(s) within the same HARQ attempt to accumulate the remaining energy required and soft combine with the initial soft bits.

The number of repetitions in each successive retransmission and/or subsequent reception may comprise a predetermined percentage of the first number of repetitions. As mentioned above, the predetermined percentage used for each successive retransmission may be based, for example, on one or more parameters relating to channel conditions, whereby such channel conditions might vary over time. As such, a different predetermined percentage may be used for each successive retransmission in one series within a HARQ attempt, compared to the predetermined percentages used for each successive retransmission in a series within a different HARQ attempt. Thus, the predetermined percentages can be selected to match one or more varying channel conditions. Such an example has the advantage of allowing the number of repetitions in each stage of retransmission to be selected according to particular channel conditions.

In one embodiment, statistical variation may also be used. For example, if there is a normal distribution around the expected number of repetitions for a wireless device with certain channel conditions (the variation coming, for example, from limitations of the channel estimation, delays, etc.) the initial transmission will (without any over-provisioning) cover 50% of the wireless devices. The retransmissions could then be tailored to such that, e.g., the first retransmission covers up to 70% and the second up to 90% of the wireless devices. As such it is likely that the second retransmission will then be larger than the first to cover the tail of the normal distribution. Thus, in one example, a successive retransmission can be larger than a previous one, but smaller than the initial transmission.

Historical data may also be used in any of the embodiments described herein to help define the predetermined percentages. For example, in an example where one or more HARQ attempts are used, whereby an initial transmission of a HARQ attempt comprises 100 repetitions, followed by a first retransmission within that HARQ attempt comprising 10 repetitions, followed by a second retransmission within that HARQ attempt comprising 5 repetitions, then if there is historical data to show that the signal being repeated is successfully decoded using on average 115 repetitions, then the predetermined percentages may be adapted such that an initial transmission of a future HARQ attempt comprises 115 repetitions, with a first retransmission within that HARQ attempt comprising 10 repetitions, and a second retransmission within that HARQ attempt comprising 5 repetitions, and so on.

Although some embodiments allow bundle sizes to be configured on-the-fly, it is noted that other embodiments allow configurations based on statistics or historical data to be broadcast by a wireless network node, for example in system information, and then used by a plurality of wireless devices.

The retransmission scheme to be used may be communicated to a wireless device in different ways. For example, different alternative methods may be used, which may be collected in a table, and the configuration of a specific cell communicated to a wireless device as a table index by means of, for example:
1)System Information broadcast;
2)Dedicated RRC signalling (e.g. in the RRC connection setup signalling); or
3) By other means

In one example, sets of different percentages may be stored in a table, such that a particular set of percentages can be selected for a certain scenario, for example by mapping a particular parameter (or parameters) to the set of percentages that should be used. In one embodiment, such a table may be stored in a wireless device, and an index to the table then communicated to the wireless device, for example during a system information broadcast, or RRC setup signalling.

It is noted that the predetermined percentages, or set of predetermined percentages form a table of predetermined percentages, may be based on criteria other than parameters related to channel conditions. For example, the first configuration information and/or second configuration information may be at least partially predetermined based on which physical resource block (PRB) group is used (for example, for Rel-13 low complexity devices, the wireless devices can only read 1.4 MHz, or 6 PRBs, at a time, thus dividing the full bandwidth into groups or narrow-bands of 6 PRBs), or one or more parameters relating to channel conditions, or a type of feedback signal used. It is noted that the type and size of acknowledgment signals used (e.g., ACK and NACK) can influence the number of radio resources needed for data transmission.

In one example the predetermined percentages follow a predefined pattern. In another example, a first set of retransmissions and/or subsequent receptions within a HARQ attempt comprise a first number of reduced repetitions compared to the first bundle size, and wherein a second set of retransmissions and/or subsequent receptions within the HARQ attempt comprise a second number of reduced repetitions compared to the first bundle size.

In one embodiment the method performed in a wireless device may comprise receiving configuration information relating to the first bundle size, and selecting the number of repetitions for the first bundle size accordingly. In a similar manner, the method performed in a wireless device may comprise receiving configuration information relating to the bundle size of one or more retransmissions, and selecting the number of repetitions for the one or more retransmissions accordingly
In one example, the configuration information relating to the first and/or other bundle sizes may be received during system configuration, for example during the broadcast of system information (in a case where the configuration information is applied to a plurality of wireless devices), or during a downlink assignment or during an uplink grant to a specific wireless device.

In other examples the configuration information may be received periodically by a wireless device, or even prior to each HARQ attempt. The embodiments described herein therefore allow the bundle sizes to be dynamically changed, both within a particular HARQ attempt and from one HARQ attempt to another.

In some examples, for wireless devices in coverage enhancement, a repetition level (i.e. number of repetitions in one or more transmissions or retransmissions within a HARQ attempt), for example for at least unicast Physical Downlink Shared Channel (PDSCH) or Physical Uplink Shared Channel (PUSCH), may be dynamically indicated based on a set of values configured by higher layers. It is noted that the configuration can be explicit or implicit. An implicit configuration may be based, for example, based on the initial bundle size, or from a channel estimation report or some other parameter. If dynamic signalling is used to convey one or more explicit values relating to repetition numbers (or levels), such dynamic signalling may be via, for example, an existing field in downlink configuration information (DCI), or a new field in DCI dedicated to provide the number of repetitions. In some examples a repetition number for PDSCH may comprise using a 2 bit field or similar to convey this information in coverage enhancement (CE) mode A, or a 3 bit field or similar to convey this information in CE mode B. In other words, consecutive bits may be used to convey how many repetitions should be used. It is noted that the values here can be indices to a configured set of available repetition levels (configured by higher layers as explained earlier in the paragraph).

In one embodiment the first bundle size, e.g., corresponding to the bundle size of an initial transmission of a HARQ attempt, is selected to match a predicted number of repetitions that are required by the wireless device to transmit and/or receive data successfully during the initial transmission. It is noted, however, that in another embodiment the size of the first bundle may be over-provisioned slightly compared to the predicted size (which increases the probability of only the initial transmission being required, but in the event that just an initial transmission is not sufficient, then a retransmission still benefits from the smaller bundle). In another embodiment, the size of the first bundle may be under-provisioned slightly compared to the predicted size (which decreases the probability of only the initial transmission being required, but still benefits from the smaller retransmissions).

From the examples described above it can therefore be seen that the size of a dynamic retransmission bundle may comprise any one of the following examples:
- a fixed number of repetitions for a plurality, for example all retransmissions (each being smaller than the initial transmission);
- a fixed number of repetitions for a plurality, for example all retransmissions as a percentage of the initial transmission bundle size;
- a number of repetitions for retransmissions that follows a predefined pattern, for example with a successively decreasing number of repetitions;
- as above, but with a pattern as a percentage of the initial transmission bundle size;
- a fixed percentage to match a standard deviation of the varying channel conditions (or any other function of the predicted variation of the channel, either based on statistics or channel estimation, as discussed earlier)
- using dynamic signaling to indicate decreasing number of repetitions for each retransmission.

With regard to the ACK and NACK feedback signals mentioned in the examples above, it is noted that these feedback signals do not necessarily have to be implemented in E-PDCCH or M-PDCCH, but could be introduced in some other physical channel (for example involving correlation detection, or a similar technique to circumvent a large cyclic redundancy check, CRC). That is, ACK or NACK can be coded with one information bit, with just this bit being transmitted for efficiency. However, for robustness a low-rate coding may be used, for example as provided in the legacy Physical HARQ Indicator Channel (PHICH, as defined in 3GPP Technical Specification TS 36.212, version 12.4.0), and for coverage enhancements a new method to transmit this may be chosen, for example over E-PDCCH or similar with a large CRC. It is noted that there may be no explicit "ACK" for uplink HARQ.

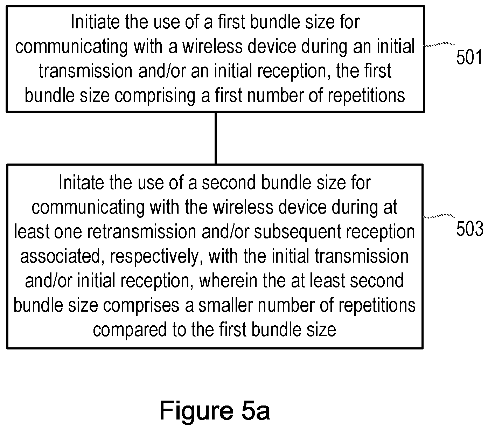

Figure 5a shows an example of a method performed in a wireless network node for handling the configuration of bundle sizes in communications involving the transmission and/or reception of more than one bundle in a transmission and/or reception attempt. The method comprises initiating the use of a first bundle size for communicating with a wireless device during an initial transmission and/or an initial reception, the first bundle size comprising a first number of repetitions, step 501. The method comprises, in step 503, initiating the use of at least a second bundle size for communicating with the wireless device during at least one retransmission and/or subsequent reception associated, respectively, with the initial transmission and/or initial reception, wherein the at least second bundle size comprises a smaller number of repetitions compared to the first bundle size.

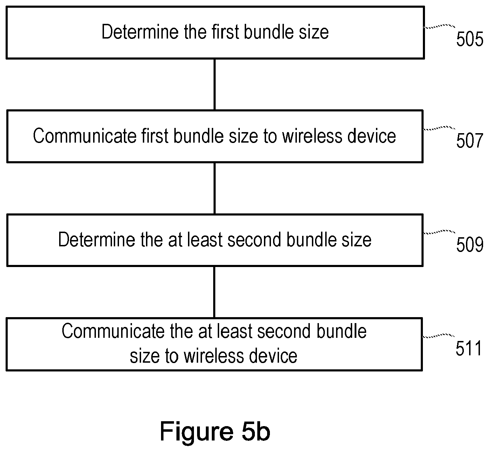

Referring to Figure 5b, the method may further comprise, determining the first bundle size, step 505, and communicating the first bundle size to the wireless device, step 507, and determining the at least second bundle size, step 509, and communicating the at least second bundle size to the wireless device, step 511. It is noted that these steps may be performed in other orders, for example whereby both determining steps are performed prior to the communicating steps.

It is noted that the step of communicating the second bundle size may be implicit from the initial bundle size, or from a channel estimation report or some other parameter. As such, in some embodiments the second bundle size need not be communicated or signaled every time there is a re-transmission.

In one embodiment the method performed in a wireless network node for handling the configuration of bundle sizes in communications involving the transmission and/or reception of more than one bundle in a transmission and/or reception attempt (e.g. relating to TTI) comprises initiating the use of a first bundle size for communicating with a wireless device during an initial transmission and/or an initial reception, the first bundle size comprising a first number of repetitions, and initiating the use of at least a second bundle size for communicating with the wireless device during at least one retransmission and/or subsequent reception associated, respectively, with the initial transmission and/or initial reception, wherein the at least second bundle size comprises a smaller number of repetitions compared to the first bundle size.

As described earlier, in one example a plurality, for example all, retransmissions and/or a plurality, for example all, subsequent receptions comprise bundle sizes having a fixed number of repetitions. The fixed number of repetitions may comprise a predetermined percentage of the first number of repetitions.

In another example, a plurality of successive retransmissions and/or subsequent receptions comprise bundle sizes which comprise a successively smaller number of repetitions. The number of repetitions in each successive retransmission and/or subsequent reception may comprise a predetermined percentage of the first number of repetitions. The predetermined percentages may follow a predefined pattern. The predetermined percentages may be selected to match one or more varying channel conditions, or some other criteria.

In one example, a first set of retransmissions and/or subsequent receptions comprise a first number of reduced repetitions compared to the first bundle size, and wherein a second set of retransmissions and/or subsequent receptions comprise a second number of reduced repetitions compared to the first bundle size.

Determining the first bundle size may comprise predicting number of repetitions that are required by the wireless network node to transmit and/or receive data successfully during the initial transmission. Determining the first bundle size and/or second bundle size may at least partially be predetermined based on physical resource block (PRB) groups, or one or more parameters relating to channel conditions, or a type of feedback signal used, or may be semi-static. Determining the first bundle size and/or second bundle size may be performed dynamically.

The configuration information may be transmitted dynamically to a wireless device, for example in downlink control information over a control channel, for example an E/M-PDCCH, either during an initial system set-up, or dynamically during use, for example at periodic intervals, or in response to a change to some parameter, including for example prior to each HARQ attempt. In one example the number of repetitions to be used in a re-transmission may be explicitly signaled in a NACK. In another example the re-transmission scheme to be used is indicated (e.g., indexed) in the scheduling of the initial bundle. Other methods of conveying the configuration information may also be used, including implicit methods. It is noted that, for uplink, there is no explicit "NACK", but this information may be included in a retransmission grant sent from eNB to UE and could be understood as "NACK".

In some examples, for wireless devices in coverage enhancement, a repetition level (i.e. number of repetitions in one or more transmissions or retransmissions, e.g. within a HARQ attempt), for example for at least unicast Physical Downlink Shared Channel (PDSCH) or Physical Uplink Shared Channel (PUSCH) may be dynamically indicated based on a set of values configured by higher layers. It is noted that the configuration can be explicit or implicit. An implicit configuration may be based, for example, based on the initial bundle size, or from a channel estimation report or some other parameter. If dynamic signalling is used to convey one or more explicit values relating to repetition numbers (or levels), such dynamic signalling may be via, for example, an existing field in downlink configuration information (DCI), or a new field in DCI dedicated to provide the number of repetitions. In some examples a repetition number for PDSCH may comprise using a 2 bit field or similar in coverage enhancement (CE) mode A, or a 3 bit field or similar to convey this information in CE mode B. In other words, consecutive bits may be used to convey how many repetitions should be used. It is noted that the values here can be indices to a configured set of available repetition levels (configured by higher layers as explained earlier in the paragraph).

In one embodiment, a method in a wireless network node for handling the configuration of bundle sizes in communications involving the transmission and/or reception of more than one bundle in a transmission and/or reception attempt (e.g. relating to TTI), comprises initiating the use of a first bundle size during an initial transmission and/or an initial reception, the first bundle size comprising a first number of repetitions, and initiating the use of a different bundle size during at least one retransmission and/or subsequent reception associated, respectively, with the initial transmission and/or initial reception, wherein the different bundle size comprises a smaller number of repetitions compared to the first bundle size.

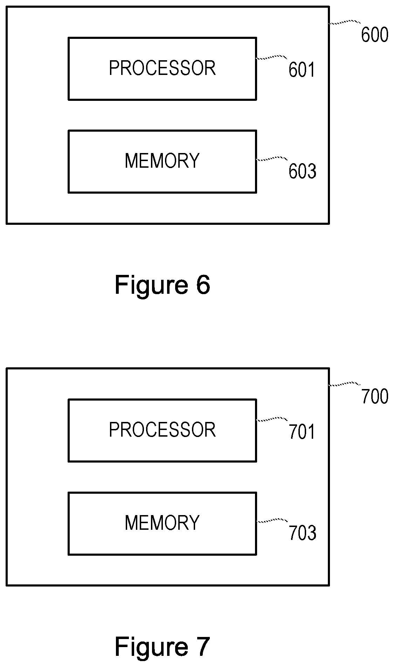

Figure 6 shows an example of a wireless device 600 according to an embodiment, for handling the configuration of bundle sizes in communications involving the transmission and/or reception of more than one bundle in a transmission and/or reception attempt (e.g. relating to TTI). The wireless device 600 comprises a processor 601 and a memory 603. The memory 603 contains instructions executable by the processor 601. The wireless device 600 is operative, through execution of the instructions stored in memory 603, to use a first bundle size during an initial transmission and/or an initial reception, the first bundle size comprising a first number of repetitions. The wireless device is further operative, again through execution of the instructions stored in memory 603, to use a different bundle size during at least one retransmission and/or subsequent reception associated, respectively, with the initial transmission and/or initial reception, wherein the different bundle size comprises a smaller number of repetitions compared to the first bundle size.

Figure 7 shows an example of a wireless network node 700 according to an embodiment, for handling the configuration of bundle sizes in communications involving the transmission and/or reception of more than one bundle in a transmission and/or reception attempt (e.g. relating to TTI). Wireless network node 700 comprises a processor 701 and a memory 703, said memory 703 containing instructions executable by said processor 701. The wireless network node 700 is operative, through execution of the instructions stored in memory 703, to initiate the use of a first bundle size for communicating with a wireless device during an initial transmission and/or an initial reception, the first bundle size comprising a first number of repetitions; and to initiate the use of at least a second bundle size for communicating with the wireless device during at least one retransmission and/or subsequent reception associated, respectively, with the initial transmission and/or initial reception, wherein the at least second bundle size comprises a smaller number of repetitions compared to the first bundle size.

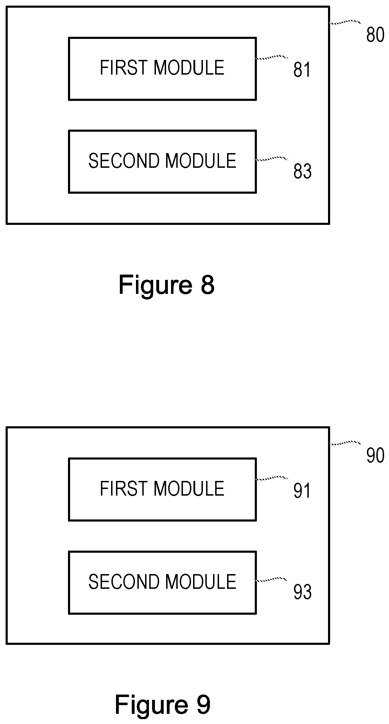

Figure 8 shows an example of a wireless device 80 according to an embodiment, for handling the configuration of bundle sizes in communications involving the transmission and/or reception of more than one bundle in a transmission and/or reception attempt (e.g. relating to TTI). The wireless device 80 comprises a first module 81 configured to use a first bundle size during an initial transmission and/or an initial reception, the first bundle size comprising a first number of repetitions. The wireless device comprises a second module 83 configured to use a different bundle size during at least one retransmission and/or subsequent reception associated, respectively, with the initial transmission and/or initial reception, wherein the different bundle size comprises a smaller number of repetitions compared to the first bundle size.

Figure 9 shows an example of a wireless network node 90 according to an embodiment, for handling the configuration of bundle sizes in communications involving the transmission and/or reception of more than one bundle in a transmission and/or reception attempt (e.g. relating to TTI). The wireless network node 90 comprises a first module 91 configured to initiate the use of a first bundle size for communicating with a wireless device during an initial transmission and/or an initial reception, the first bundle size comprising a first number of repetitions, and a second module 93 configured to initiate the use of at least a second bundle size for communicating with the wireless device during at least one retransmission and/or subsequent reception associated, respectively, with the initial transmission and/or initial reception, wherein the at least second bundle size comprises a smaller number of repetitions compared to the first bundle size.

According to another embodiment there is provided a wireless device for handling the configuration of bundle sizes in communications involving the transmission and/or reception of more than one bundle in a transmission and/or reception attempt (e.g. relating to TTI), the wireless device being adapted to: use a first bundle size during an initial transmission and/or an initial reception, the first bundle size comprising a first number of repetitions; and use a different bundle size during at least one retransmission and/or subsequent reception associated, respectively, with the initial transmission and/or initial reception, wherein the different bundle size comprises a smaller number of repetitions compared to the first bundle size.

In such an embodiment, and the wireless devices of Figure 6 and 8, a plurality (e.g. all) retransmissions and/or a plurality (e.g. all) subsequent receptions may comprise bundle sizes having a fixed number of repetitions. The fixed number of repetitions may comprise a predetermined percentage of the first number of repetitions. In another example of a wireless device, a plurality of successive retransmissions and/or subsequent receptions may comprise bundle sizes which comprise successively smaller number repetitions. The number of repetitions in each successive retransmission and/or subsequent reception may comprise a predetermined percentage of the first number of repetitions. The predetermined percentages may follow a predefined pattern. The predetermined percentages may be selected to match one or more varying channel conditions.

A first set of retransmissions and/or subsequent receptions may comprise a first number of reduced repetitions compared to the first bundle size, and a second set of retransmissions and/or subsequent receptions may comprise a second number of reduced repetitions compared to the first bundles size.

In one example a wireless device may be further adapted to receive configuration information relating to the first bundle size, and select the number of repetitions for the first bundle size accordingly. The first bundle size may be selected to match a predicted number of repetitions that are required by the wireless device to transmit and/or receive data successfully during the initial transmission.

In another example, a wireless device may be adapted to receive configuration information relating to the bundle size of one or more retransmissions, and select the number of repetitions for the one or more retransmissions accordingly.

As mentioned above, the first configuration information and/or second configuration information may be at least partially predetermined based on physical resource block, PRB, groups, or one or more parameters relating to channel conditions, or a type of feedback signal used.

A wireless device may be adapted to receive the first configuration information and/or second configuration information dynamically. As mentioned above, in some examples, for wireless devices in coverage enhancement, a repetition level for at least unicast PDSCH/PUSCH may be dynamically indicated based on a set of values configured by higher layers. It is noted that the configuration can be explicit or implicit. The dynamic signally may be via, for example, an existing field in downlink configuration information (DCI), or a new field in DCI dedicated to provide the number of repetitions. In some examples a repetition number for PDSCH may comprise a 2 bit in coverage enhancement (CE) mode A, 3 bit in CE mode B.

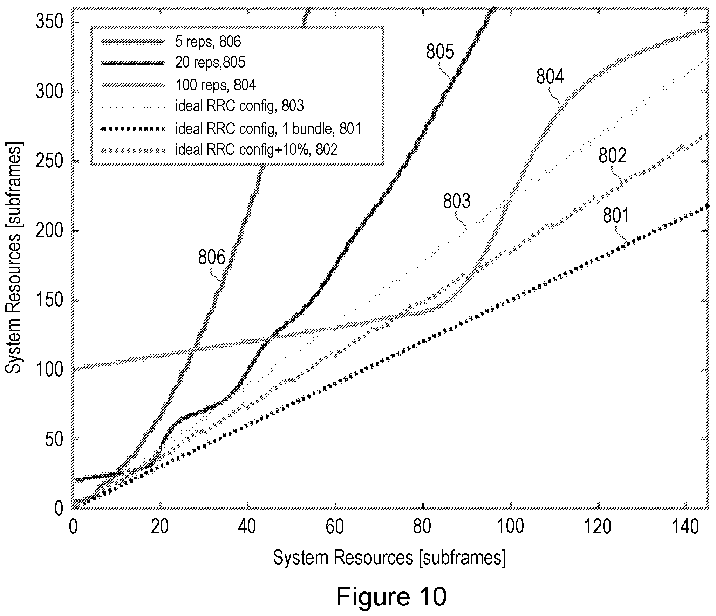

Referring to Figure 10, the number of system resources required for a transmission of a certain required bundle size is plotted, for an arrangement that does not use the method or apparatus described in the embodiments herein. In particular, Figure 10 shows a graphical representation of an example of the system resource cost of various bundle size alternatives for an Enhanced Physical Downlink Control Chanel (E-PDCCH) having a feedback factor of 0.5, i.e., requiring a bundle size that is 50% of the size of that for transmission. The dotted line 801 ("ideal RRC config, 1 bundle") indicates an ideal case were transmissions are always carried out with the exact number of repetitions and retransmissions are never required. As mentioned above, in all cases the feedback, for example on E-PDCCH, requires 50% of the number of repetitions of the data channel. The curve labelled 803 ('ideal RRC config') introduces a more realistic case with statistical variation on the number of required repetitions, where it can be seen that performance drops (i.e. more system resources needed), since retransmissions are now needed in some cases. This corresponds, for example, to the scenario in Figure 2b above. The fixed and smaller bundle sizes in the scenario of Figure 2c above would help to reduce the number of unnecessary repetition on the data channel (curve 802 illustrating an ideal scenario where no retransmissions are used, and where the ideal bundle size is over-provisioned by 10%, and leads to bundles as per Figure 2a). However, as can be seen from the curves 804, 805 and 806 in Figure 10, the cost of the many feedback transmissions results in very poor performance for large bundle sizes. The curve 804 illustrates the additional system resources needed for a bundle size of 100 repetitions, the curve 805 illustrates the additional system resources needed for a bundle size of 20 repetitions, while the curve 806 illustrates the additional system resources needed for a bundle size of 5 repetitions.

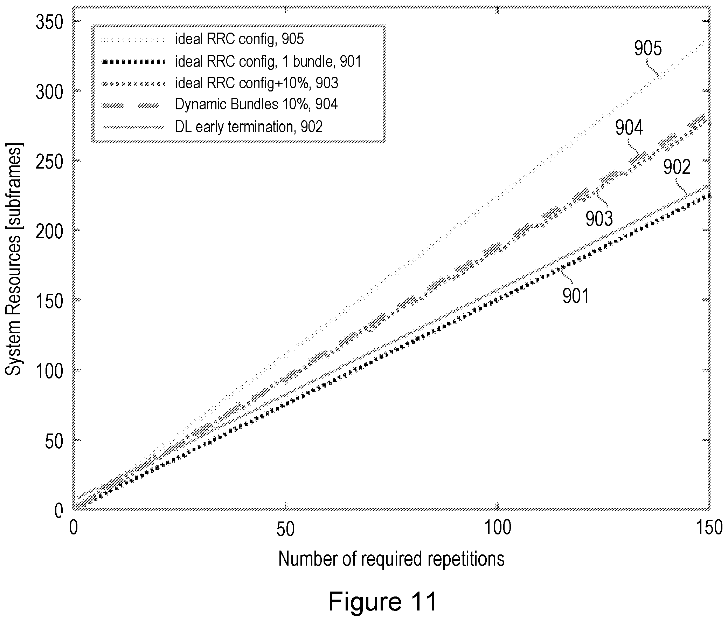

Figure 11 shows similar plots to the above, for an E-PDCCH feedback factor of 0.5, but using embodiments of the invention. The dashed curve labelled 904 ('Dynamic Bundles 10%') shows the performance of the case where all retransmissions are carried out with repetition bundle sizes of 10% of the initial bundle size. The performance is significantly better and closer to the ideal case. However the cost of the feedback is relatively high and the same performance can be achieved with a 10% safety margin (over-provisioning) on the initial bundle size as shown by the dashed curve 903 ('ideal RRC config +10%'). The curve labelled 905 represents the ideal size.

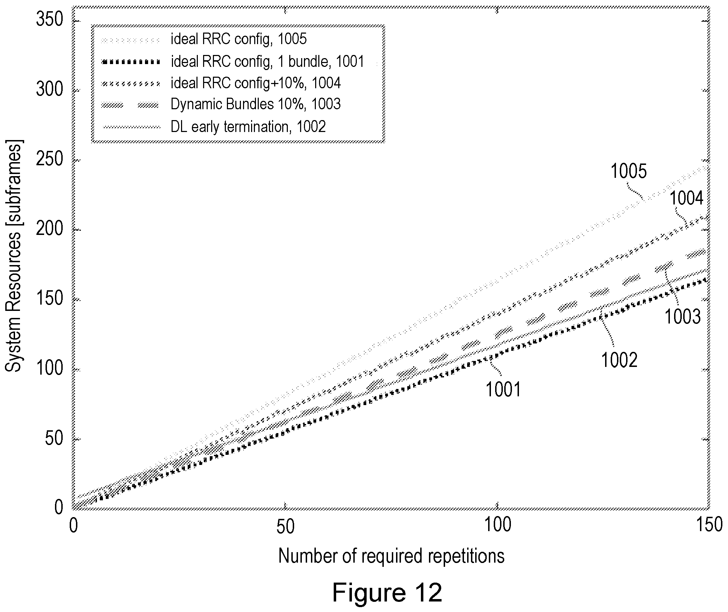

Assuming that the smaller 1-bit feedback would decrease the number of repetitions for EPDCCH from say, 50% to 10%, of the data transmission bundle size, the dynamic bundle size solution becomes beneficial to just adding a 10% safety margin of the repetitions, as seen in Figure 12. Figure 12 shows a graphical representation of another example for an E-PDCCH feedback factor of 0.1, i.e. 10% of the data bundle. The dynamic bundle size has an increased gain relative to simple over-provisioning, with a lower cost on the feedback. This is because the dynamic bundle size can adopt better to the channel conditions.

A benefit of the embodiments described herein is that adaptive HARQ retransmissions can be supported with a minimum number of repetitions needed for the feedback, and whereby the gain is larger than simple over-provisioning. In the "legacy" adaptive HARQ retransmission case the full scheduling information must be included in the HARQ feedback (new DCI, MSC etc. and number of repetitions). If instead only 1-bit feedback is used (e.g. in E-PDCCH or an evolution of E-PDCCH, such as M-PDCCH) the transmissions would be very robust and only very few repetitions would be required. This provides a very low overhead and system resource cost for the feedback, which is beneficial for being able to have HARQ retransmissions in the Coverage Enhanced case with many repetitions. Therefore, the embodiments described herein make it feasible to rely on HARQ retransmissions, which also enables the use of adaptive retransmissions and not having to overprovision the bundle size for the initial transmission.

From the above it can be seen that embodiments of the present invention, as described herein, enable the number of repetitions in a bundle, e.g. a TTI bundle, to be dynamically altered depending on which retransmission the bundle relates to. For example, an initial transmission can contain the number of repetitions which is expected for successful reception, while retransmissions contain a considerably smaller number of repetitions.

Further, in some examples described herein the number of repetitions for the retransmissions can decrease with the number of the retransmission, e.g., retransmission three may contain fewer repetitions than retransmission two, while in other examples a fixed number of retransmissions can be used, each having fewer repetitions that an initial transmission.

The embodiments described herein have an advantage in that the number of unnecessary repetitions can be minimized, e.g., after a UE has correctly decoded, as well as the number of NACKs that is sent over a control channel such as E-PDCCH.

The embodiments described herein introduce dynamic TTI bundle sizes for HARQ retransmissions, and may also be used in the case where a 1-bit feedback is used (e.g., ACK or NACK).

Although the term "wireless device" is used in the description, it is noted that this term encompasses other terms used to denote wireless devices, such as user equipment (UE). It should be understood by the person skilled in the art that "UE" is a non-limiting term comprising any mobile or wireless device or node equipped with a radio interface allowing for at least one of: transmitting signals in uplink (UL), receiving and/or measuring signals in downlink (DL), and transmitting and/or receiving signals in a D2D/sidelink mode. A wireless device herein may comprise a UE (in its general sense) capable of operating or at least performing measurements in one or more frequencies, carrier frequencies, component carriers or frequency bands. It may be a "UE" operating in single- or multi-radio access technology (RAT) or multi-standard mode. As well as "wireless device" or "UE", the terms "mobile device" and "terminal device" may be used interchangeably in the description, and it will be appreciated that such a device does not necessarily have to be 'mobile' in the sense that it is carried by a user. Instead, the term "mobile device" encompasses any device that is capable of communicating with communication networks that operate according to one or more mobile communication standards, such as the Global System for Mobile communications, GSM, Universal Mobile Telecommunications System (UMTS), Long-Term Evolution, LTE, etc.

It should be noted that use of the term "wireless network node" as used herein can refer to a base station, such as an eNodeB, a network node in the RAN responsible for resource management, such as a radio network controller (RNC), or, in some cases, a core network node, such as a mobility management entity (MME), a ProSe function (ProSe-F) node or a ProSe Application Server. It is noted that a wireless network node may comprise functional units located in the same physical location, or whereby one or more functional units are located in one or more other physical locations, for example in a cloud or different clouds.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method in a wireless network node for handling the configuration of bundle sizes in transmission time interval, TTI, communications involving the transmission of more than one bundle in a HARQ transmission attempt, the method comprising:
initiating the use of a first bundle size for communicating with a wireless device during an initial transmission, the first bundle size comprising a first number of repetitions; and
initiating the use of at least a second bundle size for communicating with the wireless device during at least one retransmission associated with the initial transmission, wherein the at least second bundle size comprises a smaller number of repetitions compared to the first bundle size, **characterized by**:
determining the first bundle size, and communicating the first bundle size to the wireless device; and
determining the at least second bundle size, and communicating the at least second bundle size to the wireless device;
wherein communicating a bundle size to the wireless device comprises using:
an existing field in downlink configuration information, DCI; or
a new field in downlink configuration information, DCI.

2. A method as claimed in claim 1, wherein a plurality of retransmissions comprise bundle sizes having a fixed number of repetitions.

3. A method as claimed in claim 2, wherein the fixed number of repetitions comprises a predetermined percentage of the first number of repetitions.

4. A method as claimed in claim 1, wherein a plurality of successive retransmissions comprise bundle sizes which comprise a successively smaller number of repetitions.

5. A method as claimed in claim 4, wherein the number of repetitions in each successive retransmission comprises a predetermined percentage of the first number of repetitions.

6. A method as claimed in claim 5, wherein the predetermined percentages follow a predefined pattern.

7. A method as claimed in claim 5 or 6, wherein the predetermined percentages are selected to match one or more varying channel conditions.

8. A method as claimed in any one of claims 1 to 6, wherein a first set of retransmissions comprise a first reduced number of repetitions compared to the first bundle size, and wherein a second set of retransmissions comprise a second reduced number of repetitions compared to the first bundle size.

9. A method as claimed in any one of claims 1 to 8, wherein determining the first bundle size comprises predicting number of repetitions that are required by the wireless network node to transmit data successfully during the initial transmission.

10. A method as claimed in any one of claims 1 to 9, wherein determining the first bundle size and/or second bundle size is at least partially predetermined based on one or more of:
physical resource block, PRB, groups; or
one or more parameters relating to channel conditions; or
a type of feedback signal used.

11. A method as claimed in any one of claims 1 to 10, wherein determining the first bundle size and/or second bundle size is performed dynamically.

12. A method in a wireless device for handling the configuration of bundle sizes in transmission time interval, TTI, communications involving the reception of more than one bundle in a HARQ reception attempt, the method comprising:
using a first bundle size during an initial reception, the first bundle size comprising a first number of repetitions; and
using a different bundle size during at least one subsequent reception associated with the initial reception, wherein the different bundle size comprises a smaller number of repetitions compared to the first bundle size, **characterized by**:
dynamically receiving configuration information relating to the first bundle size and the different bundle size, wherein the configuration information is received:
via an existing field in downlink configuration information, DCI; or
via a new field in downlink configuration information, DCI.

13. A method as claimed in claim 12 wherein:
a plurality of subsequent receptions comprise bundle sizes having a fixed number of repetitions; or
a plurality of subsequent receptions comprise bundle sizes which comprise a successively smaller number of repetitions.

14. A method as claimed in any one of clams 1 to 11, wherein the at least one retransmission and the associated initial transmission form part of the same hybrid automatic repeat request, HARQ, attempt.

15. A wireless network node for handling the configuration of bundle sizes in transmission time interval, TTI, communications involving the transmission of more than one bundle in a HARQ transmission attempt, the wireless network node being adapted to:
initiate the use of a first bundle size for communicating with a wireless device during an initial transmission, the first bundle size comprising a first number of repetitions; and
initiate the use of at least a second bundle size for communicating with the wireless device during at least one retransmission associated with the initial transmission, wherein the at least second bundle size comprises a smaller number of repetitions compared to the first bundle size, **characterized in that** the wireless network node is adapted to:
determine the first bundle size, and communicate the first bundle size to the wireless device; and determine the at least second bundle size, and communicate the at least second bundle size to the wireless device;
wherein communicating a bundle size to the wireless device comprises using:
an existing field in downlink configuration information, DCI; or
a new field in downlink configuration information, DCI.

16. A wireless device for handling the configuration of bundle sizes in transmission time interval, TTI, communications involving the reception of more than one bundle in a HARQ reception attempt, the wireless device being adapted to:
use a first bundle size during an initial reception, the first bundle size comprising a first number of repetitions; and
use a different bundle size during at least one subsequent reception associated with the initial reception, wherein the different bundle size comprises a smaller number of repetitions compared to the first bundle size, **characterized in that** the wireless device is adapted to:
dynamically receive configuration information relating to the first bundle size and the different bundle size, wherein the configuration information is received:
via an existing field in downlink configuration information, DCI; or
via a new field in downlink configuration information, DCI.

17. A wireless device for handling the configuration of bundle sizes in transmission time interval, TTI, communications involving the reception of more than one bundle in a HARQ reception attempt, the wireless device comprising a processor and a memory, said memory containing instructions executable by said processor to carry out the method according to claim 12.

18. A wireless network node for handling the configuration of bundle sizes in transmission time interval, TTI, communications involving the transmission of more than one bundle in a HARQ transmission attempt, the wireless network node comprising a processor and a memory, said memory containing instructions executable by said processor to carry out the method according to claim 1.

## Patentansprüche

1. Verfahren in einem drahtlosen Netzknoten zum Handhaben der Konfiguration von Bündelgrößen in Übertragungszeitintervall-Kommunikationen, TTI-Kommunikationen, die die Übertragung von mehr als einem Bündel in einem HARQ-Übertragungsversuch beinhalten, wobei das Verfahren Folgendes umfasst:
Initiieren der Verwendung einer ersten Bündelgröße zum Kommunizieren mit einer drahtlosen Vorrichtung während einer anfänglichen Übertragung, wobei die erste Bündelgröße eine erste Anzahl von Wiederholungen umfasst; und
Initiieren der Verwendung mindestens einer zweiten Bündelgröße zum Kommunizieren mit der drahtlosen Vorrichtung während mindestens einer Neuübertragung im Zusammenhang mit der ersten Übertragung, wobei die mindestens zweite Bündelgröße eine geringere Anzahl von Wiederholungen im Vergleich zu der ersten Bündelgröße umfasst, **gekennzeichnet durch:**
Bestimmen der ersten Bündelgröße und Kommunizieren der ersten Bündelgröße an die drahtlose Vorrichtung; und
Bestimmen der mindestens zweiten Bündelgröße und Kommunizieren der mindestens zweiten Bündelgröße an die drahtlose Vorrichtung;
wobei das Kommunizieren einer Bündelgröße an die drahtlose Vorrichtung das Verwenden des Folgenden umfasst:
eines bestehenden Feldes in Downlink-Konfigurationsinformationen, DCI; oder
eines neuen Feldes in Downlink-Konfigurationsinformationen, DCI.

2. Verfahren nach Anspruch 1, wobei eine Vielzahl von Neuübertragungen Bündelgrößen umfasst, die eine feste Anzahl von Wiederholungen aufweisen.

3. Verfahren nach Anspruch 2, wobei die feste Anzahl von Wiederholungen einen vorbestimmten Prozentsatz der ersten Anzahl von Wiederholungen umfasst.

4. Verfahren nach Anspruch 1, wobei eine Vielzahl von sukzessiven Neuübertragungen Bündelgrößen umfasst, die eine sukzessiv kleinere Anzahl von Wiederholungen umfassen.

5. Verfahren nach Anspruch 4, wobei die Anzahl von Wiederholungen in jeder sukzessiven Neuübertragung einen vorbestimmten Prozentsatz der ersten Anzahl von Wiederholungen umfasst.

6. Verfahren nach Anspruch 5, wobei die vorbestimmten Prozentsätze einem vordefinierten Muster folgen.

7. Verfahren nach Anspruch 5 oder 6, wobei die vorbestimmten Prozentsätze so ausgewählt werden, dass sie mit einer oder mehreren variierenden Kanalbedingungen übereinstimmen.

8. Verfahren nach einem der Ansprüche 1 bis 6, wobei ein erster Satz von Neuübertragungen eine erste reduzierte Anzahl von Wiederholungen im Vergleich zu der ersten Bündelgröße umfasst und wobei ein zweiter Satz von Neuübertragungen eine zweite reduzierte Anzahl von Wiederholungen im Vergleich zu der ersten Bündelgröße umfasst.

9. Verfahren nach einem der Ansprüche 1 bis 8, wobei das Bestimmen der ersten Bündelgröße das Vorhersagen der Anzahl von Wiederholungen umfasst, die von dem drahtlosen Netzknoten benötigt werden, um Daten während der anfänglichen Übertragung erfolgreich zu übertragen.

10. Verfahren nach einem der Ansprüche 1 bis 9, wobei das Bestimmen der ersten Bündelgröße und/oder der zweiten Bündelgröße mindestens teilweise basierend auf einem oder mehreren von Folgendem vorbestimmt wird:
physische Ressourcenblock-Gruppen, PRB-Gruppen; oder
ein oder mehrere Parameter, die sich auf Kanalbedingungen beziehen; oder
eine Art von verwendetem Rückkopplungssignal.

11. Verfahren nach einem der Ansprüche 1 bis 10, wobei das Bestimmen der ersten Bündelgröße und/oder der zweiten Bündelgröße dynamisch durchgeführt wird.

12. Verfahren in einer drahtlosen Vorrichtung zum Handhaben der Konfiguration von Bündelgrößen in Übertragungszeitintervall-Kommunikationen, TTI-Kommunikationen, die den Empfang von mehr als einem Bündel in einem HARQ-Empfangsversuch beinhalten, wobei das Verfahren Folgendes umfasst:
Verwenden einer ersten Bündelgröße während eines anfänglichen Empfangs, wobei die erste Bündelgröße eine erste Anzahl von Wiederholungen umfasst; und
Verwenden einer anderen Bündelgröße während mindestens eines dem anfänglichen Empfang zugeordneten nachfolgenden Empfangs, wobei die andere Bündelgröße im Vergleich zu der ersten Bündelgröße eine geringere Anzahl von Wiederholungen umfasst,
**gekennzeichnet durch:**
dynamisches Empfangen von Konfigurationsinformationen in Bezug auf die erste Bündelgröße und die andere Bündelgröße, wobei die Konfigurationsinformationen folgendermaßen empfangen werden:
über ein bestehendes Feld in Downlink-Konfigurationsinformationen, DCI; oder
über ein neues Feld in Downlink-Konfigurationsinformationen, DCI.

13. Verfahren nach Anspruch 12, wobei:
eine Vielzahl von nachfolgenden Empfängen Bündelgrößen umfassen, die eine feste Anzahl von Wiederholungen aufweisen; oder
eine Vielzahl von nachfolgenden Empfängen Bündelgrößen umfassen, die eine sukzessiv geringere Anzahl von Wiederholungen umfassen.

14. Verfahren nach einem der Ansprüche 1 bis 11, wobei die mindestens eine Neuübertragung und die zugeordnete anfängliche Übertragung einen Teil desselben hybriden automatischen Wiederholungsanforderungs-Versuchs, HARQ-Versuchs, bilden.

15. Drahtloser Netzknoten zum Handhaben der Konfiguration von Bündelgrößen in Übertragungszeitintervall-Kommunikationen, TTI-Kommunikationen, die die Übertragung von mehr als einem Bündel in einem HARQ-Übertragungsversuch beinhalten, wobei der drahtlose Netzknoten zu Folgendem angepasst ist:
die Verwendung einer ersten Bündelgröße zum Kommunizieren mit einer drahtlosen Vorrichtung während einer anfänglichen Übertragung zu initiieren, wobei die erste Bündelgröße eine erste Anzahl von Wiederholungen umfasst; und
die Verwendung mindestens einer zweiten Bündelgröße zum Kommunizieren mit der drahtlosen Vorrichtung während mindestens einer Neuübertragung im Zusammenhang mit der ersten Übertragung zu initiieren, wobei die mindestens zweite Bündelgröße eine geringere Anzahl von Wiederholungen im Vergleich zu der ersten Bündelgröße umfasst, **dadurch gekennzeichnet, dass** der drahtlose Netzknoten zu Folgendem angepasst ist:
die erste Bündelgröße zu bestimmen und die erste Bündelgröße an die drahtlose Vorrichtung zu kommunizieren; und
die mindestens zweite Bündelgröße zu bestimmen und die mindestens zweite Bündelgröße an die drahtlose Vorrichtung zu kommunizieren;
wobei das Kommunizieren einer Bündelgröße an die drahtlose Vorrichtung das Verwenden des Folgenden umfasst:
eines bestehenden Feldes in Downlink-Konfigurationsinformationen, DCI; oder
eines neuen Feldes in Downlink-Konfigurationsinformationen, DCI.

16. Drahtlose Vorrichtung zum Handhaben der Konfiguration von Bündelgrößen in Übertragungszeitintervall-Kommunikationen, TTI-Kommunikationen, die den Empfang von mehr als einem Bündel in einem HARQ-Empfangsversuch beinhalten, wobei die drahtlose Vorrichtung zu Folgendem angepasst ist:
eine erste Bündelgröße während eines anfänglichen Empfangs zu verwenden, wobei die erste Bündelgröße eine erste Anzahl von Wiederholungen umfasst; und
eine andere Bündelgröße während mindestens eines dem anfänglichen Empfang zugeordneten nachfolgenden Empfangs zu verwenden, wobei die andere Bündelgröße im Vergleich zur ersten Bündelgröße eine geringere Anzahl von Wiederholungen umfasst,
**dadurch gekennzeichnet, dass** die drahtlose Vorrichtung zu Folgendem angepasst ist:
Konfigurationsinformationen in Bezug auf die erste Bündelgröße und die andere Bündelgröße dynamisch zu empfangen, wobei die Konfigurationsinformationen folgendermaßen empfangen werden:
über ein bestehendes Feld in Downlink-Konfigurationsinformationen, DCI; oder
über ein neues Feld in Downlink-Konfigurationsinformationen, DCI.

17. Drahtlose Vorrichtung zum Handhaben der Konfiguration von Bündelgrößen in Übertragungszeitintervall-Kommunikationen, TTI-Kommunikationen, die den Empfang von mehr als einem Bündel in einem HARQ-Empfangsversuch beinhalten, wobei die drahtlose Vorrichtung einen Prozessor und einen Speicher umfasst, wobei der Speicher Anweisungen enthält, die durch den Prozessor ausführbar sind, um das Verfahren nach Anspruch 12 durchzuführen.

18. Drahtloser Netzknoten zum Handhaben der Konfiguration von Bündelgrößen in Übertragungszeitintervall-Kommunikationen, TTI-Kommunikationen, die die Übertragung von mehr als einem Bündel in einem HARQ-Übertragungsversuch beinhalten, wobei der drahtlose Netzknoten einen Prozessor und einen Speicher umfasst, wobei der Speicher Anweisungen enthält, die durch den Prozessor ausführbar sind, um das Verfahren nach Anspruch 1 durchzuführen.

## Revendications

1. Procédé dans un noeud de réseau sans fil pour la prise en charge de la configuration de tailles de lot dans des communications d'intervalle de temps de transmission, TTI, impliquant la transmission de plus d'un lot dans une tentative de transmission HARQ, le procédé comprenant :
le déclenchement de l'utilisation d'une première taille de lot pour communiquer avec un dispositif sans fil pendant une transmission initiale, la première taille de lot comprenant un premier nombre de répétitions ; et
le déclenchement de l'utilisation d'au moins une deuxième taille de lot pour communiquer avec le dispositif sans fil pendant au moins une retransmission associée à la transmission initiale, dans lequel l'au moins deuxième taille de lot comprend un plus petit nombre de répétitions par comparaison avec la première taille de lot, **caractérisé par** :
la détermination de la première taille de lot, et la communication de la première taille de lot au dispositif sans fil ; et
la détermination de l'au moins deuxième taille de lot, et la communication de l'au moins deuxième taille de lot au dispositif sans fil ;
dans lequel la communication d'une taille de lot au dispositif sans fil comprend l'utilisation :
d'un champ existant dans des informations de configuration de liaison descendante, DCI ; ou
d'un nouveau champ dans des informations de configuration de liaison descendante, DCI.

2. Procédé selon la revendication 1, dans lequel une pluralité de retransmissions comprend des tailles de lot ayant un nombre fixe de répétitions.

3. Procédé selon la revendication 2, dans lequel le nombre fixe de répétitions comprend un pourcentage prédéterminé du premier nombre de répétitions.

4. Procédé selon la revendication 1, dans lequel une pluralité de retransmissions successives comprend des tailles de lot qui comprennent un nombre de répétitions successivement plus petit.

5. Procédé selon la revendication 4, dans lequel le nombre de répétitions dans chaque retransmission successive comprend un pourcentage prédéterminé du premier nombre de répétitions.

6. Procédé selon la revendication 5, dans lequel les pourcentages prédéterminés suivent un motif prédéfini.

7. Procédé selon la revendication 5 ou 6, dans lequel les pourcentages prédéterminés sont sélectionnés pour correspondre à une ou plusieurs conditions de canal qui varient.

8. Procédé selon l'une quelconque des revendications 1 à 6, dans lequel un premier ensemble de retransmissions comprend un premier nombre réduit de répétitions par comparaison avec la première taille de lot, et dans lequel un deuxième ensemble de retransmissions comprend un deuxième nombre réduit de répétitions par comparaison avec la première taille de lot.

9. Procédé selon l'une quelconque des revendications 1 à 8, dans lequel la détermination de la première taille de lot comprend la prévision du nombre de répétitions qui sont requises par le noeud de réseau sans fil pour transmettre des données avec succès pendant la transmission initiale.

10. Procédé selon l'une quelconque des revendications 1 à 9, dans lequel la détermination de la première taille de lot et/ou de la deuxième taille de lot est au moins partiellement prédéterminée sur la base d'un ou plusieurs parmi :
des groupes de blocs de ressources physiques, PRB ; ou
un ou plusieurs paramètres se rapportant à des conditions de canal ; ou
un type de signal de rétroaction utilisé.

11. Procédé selon l'une quelconque des revendications 1 à 10, dans lequel la détermination de la première taille de lot et/ou de la deuxième taille de lot est mise en oeuvre dynamiquement.

12. Procédé dans un dispositif sans fil pour la prise en charge de la configuration de tailles de lot dans des communications d'intervalle de temps de transmission, TTI, impliquant la réception de plus d'un lot dans une tentative de réception HARQ, le procédé comprenant :
l'utilisation d'une première taille de lot pendant une réception initiale, la première taille de lot comprenant un premier nombre de répétitions ; et
l'utilisation d'une taille de lot différente pendant au moins une réception ultérieure associée à la réception initiale,
dans lequel la taille de lot différente comprend un plus petit nombre de répétitions par comparaison avec la première taille de lot, **caractérisé par** :
la réception dynamique d'informations de configuration se rapportant à la première taille de lot et à la taille de lot différente, dans lequel les informations de configuration sont reçues :
via un champ existant dans des informations de configuration de liaison descendante, DCI ; ou
via un nouveau champ dans des informations de configuration de liaison descendante, DCI.

13. Procédé selon la revendication 12 dans lequel :
une pluralité de réceptions ultérieures comprend des tailles de lot ayant un nombre fixe de répétitions ; ou
une pluralité de réceptions ultérieures comprend des tailles de lot qui comprennent un nombre de répétitions successivement plus petit.

14. Procédé selon l'une quelconque des revendications 1 à 11, dans lequel l'au moins une retransmission et la transmission initiale associée font partie de la même tentative de demande de répétition automatique hybride, HARQ.

15. Noeud de réseau sans fil pour la prise en charge de la configuration de tailles de lot dans des communications d'intervalle de temps de transmission, TTI, impliquant la transmission de plus d'un lot dans une tentative de transmission HARQ, le noeud de réseau sans fil étant conçu pour :
déclencher l'utilisation d'une première taille de lot pour communiquer avec un dispositif sans fil pendant une transmission initiale, la première taille de lot comprenant un premier nombre de répétitions ; et
déclencher l'utilisation d'au moins une deuxième taille de lot pour communiquer avec le dispositif sans fil pendant au moins une retransmission associée à la transmission initiale,
dans lequel l'au moins deuxième taille de lot comprend un plus petit nombre de répétitions par comparaison avec la première taille de lot, **caractérisé en ce que** le noeud de réseau sans fil est conçu pour :
déterminer la première taille de lot, et communiquer la première taille de lot au dispositif sans fil ; et
déterminer l'au moins deuxième taille de lot, et communiquer l'au moins deuxième taille de lot au dispositif sans fil ;
dans lequel la communication d'une taille de lot au dispositif sans fil comprend l'utilisation :
d'un champ existant dans des informations de configuration de liaison descendante, DCI ; ou
d'un nouveau champ dans des informations de configuration de liaison descendante, DCI.

16. Dispositif sans fil pour la prise en charge de la configuration de tailles de lot dans des communications d'intervalle de temps de transmission, TTI, impliquant la réception de plus d'un lot dans une tentative de réception HARQ, le dispositif sans fil étant conçu pour :
utiliser une première taille de lot pendant une réception initiale, la première taille de lot comprenant un premier nombre de répétitions ; et
utiliser une taille de lot différente pendant au moins une réception ultérieure associée à la réception initiale, dans lequel la taille de lot différente comprend un plus petit nombre de répétitions par comparaison avec la première taille de lot,
**caractérisé en ce que** le dispositif sans fil est conçu pour :
recevoir dynamiquement des informations de configuration se rapportant à la première taille de lot et à la taille de lot différente, dans lequel les informations de configuration sont reçues :
via un champ existant dans des informations de configuration de liaison descendante, DCI ; ou
via un nouveau champ dans des informations de configuration de liaison descendante, DCI.

17. Dispositif sans fil pour la prise en charge de la configuration de tailles de lot dans des communications d'intervalle de temps de transmission, TTI, impliquant la réception de plus d'un faisceau dans une tentative de réception HARQ, le dispositif sans fil comprenant un processeur et une mémoire, ladite mémoire contenant des instructions exécutables par ledit processeur pour effectuer le procédé selon la revendication 12.

18. Noeud de réseau sans fil pour la prise en charge de la configuration de tailles de lot dans des communications d'intervalle de temps de transmission, TTI, impliquant la transmission de plus d'un lot dans une tentative de transmission HARQ, le noeud de réseau sans fil comprenant un processeur et une mémoire, ladite mémoire contenant des instructions exécutables par ledit processeur pour effectuer le procédé selon la revendication 1.
